# FASCICULE DE BREVET EUROPEEN

(11) **EP 1 571 059 B1**
(45) Date de publication et mention de la délivrance du brevet: **02.11.2006**
(21) Numéro de dépôt: 05003849.6
(22) Date de dépôt: 23.02.2005
(51) Int. Cl.: B60T 11/20, B60T 13/569

(54) **Dispositif de centrage axial pour un servomoteur pneumatique d'assistance auf freinage comprennant une bille**
Eine Kugel umfassende Zentriervorrichtung für einen pneumatischen Bremskraftverstärker
Centering device for pneumatic brake booster comprising a ball

(30) Priorité: 02.03.2004 FR 0402233
(43) Date de publication de la demande: 07.09.2005
(73) Titulaire: ROBERT BOSCH GMBH, 70442 Stuttgart (DE)
(72) Inventeur: Kientz, Jean-Marc, 77270 Villeparisis (FR)
(74) Mandataire: Hurwic, Aleksander Wiktor

(56) Documents cités:
- US-A- 2 975 775
- US-A- 3 983 703
- US-A- 5 761 983

## Description

L'invention concerne un dispositif de centrage axial d'effort applicable notamment à la transmission d'efforts fournis par un servomoteur d'assistance de freinage au maître cylindre du circuit de freinage, connu par exemple du document US-A- 5,761,983

Un tel système comporte principalement :
- une tige de commande susceptible, à partir d'une position de repos, de subir un déplacement suivant une direction axiale sous l'effet d'un effort d'entrée, cette tige étant terminée par un palpeur ;
- un piston pneumatique mobile suivant cette direction axiale, depuis une position de repos, sous l'effet d'une différence de pression commandée par le déplacement axial de la tige de commande, ce piston pneumatique présentant une surface annulaire axiale qui entoure le palpeur ;
- un disque de réaction logé dans une coupelle à fond plat et présentant une face libre sur laquelle la surface annulaire axiale dudit piston pneumatique et le plongeur sont susceptibles d'appliquer des efforts de sortie ;
- une tige de poussée sensiblement axiale dont une première extrémité reçoit ces efforts de sortie et dont une autre extrémité les retransmet à un piston hydraulique du maître-cylindre ; et
- des moyens de maintien pour assurer que la tige de poussée conserve une direction sensiblement axiale.

De façon générale, les servomoteurs d'assistance au freinage et les maîtres-cylindres qui y sont associés sont construits en grande série et, sont pour cette raison soumis à des compromis très délicats sur le plan du coût et de la précision de fabrication. Ceci conduit en particulier à des difficultés importantes dans l'obtention d'un alignement parfait de la tige de poussée avec la tige de commande, sans lequel des déformations sous contraintes, suivies d'un endommagement irréversible du servomoteur peuvent apparaître.

De plus, il peut être difficile de rendre colinéaires l'axe de la tige de poussée et l'axe du piston du maître cylindre.

L'invention fournit une solution permettant de s'affranchir à la fois du fait que les axes de la tige de poussée et du piston du maître cylindre ne soient pas colinéaires et du fait qu'ils ne soient pas rigoureusement parallèles.

L'invention concerne donc un dispositif de centrage axial d'effort pour un ensemble composé d'un servomoteur pneumatique d'assistance au freinage et d'un maître-cylindre, comprenant :
- une tige de commande susceptible, à partir d'une position de repos, de subir un déplacement suivant une première direction axiale sous l'effet d'un effort d'entrée, cette tige étant terminée par un palpeur;
- un piston pneumatique mobile suivant cette première direction axiale, depuis une position de repos, sous l'effet d'une différence de pression commandée par le déplacement axial de la tige de commande;
- une tige de poussée orientée sensiblement selon la première direction axiale, une première extrémité de cette tige de poussée recevant les efforts de sortie du piston du servomoteur) et dont une deuxième extrémité retransmet ces efforts contre une extrémité d'un piston hydraulique du maître-cylindre, le piston hydraulique étant orienté selon une deuxième direction axiale colinéaire ou non avec la première direction axiale.

Selon l'invention, il est prévu un élément de forme arrondie situé entre ledit piston hydraulique et la tige de poussée. L'une au moins de ladite extrémité avant de la tige de poussée ou de ladite extrémité arrière du piston hydraulique présentent une surface plane perpendiculaire à la première direction axiale ou à la deuxième direction axiale et qui est en contact avec l'élément de forme arrondie.

L'élément de forme arrondie est avantageusement de forme sphérique.

Selon une forme de réalisation de l'invention, le dit élément de forme arrondie est l'extrémité avant de la tige de poussée, ou bien ledit élément de forme arrondie est l'extrémité arrière du piston hydraulique.

Selon une autre forme de réalisation, ledit élément de forme arrondie est emprisonné dans l'extrémité arrière du piston hydraulique ou est fixé à l'extrémité avant de la tige de poussée.

Selon une variante de réalisation de l'invention, on peut prévoir que l'extrémité arrière du piston hydraulique comporte un dispositif de centrage disposé selon la deuxième direction axiale et dans lequel est placé l'élément de forme arrondie.

Alternativement, on peut prévoir que l'extrémité avant de la tige de poussée comporte un dispositif de centrage disposé selon la première direction axiale et dans lequel est placé l'élément de forme arrondie.

Préférentiellement, ce dispositif de centrage de l'élément de forme arrondie comporte une cuvette réalisée à l'extrémité arrière du piston hydraulique ou à l'extrémité avant de la tige de poussée. Cette cuvette peut avoir une forme générale conique, sphérique ou paraboloïde.

Préférentiellement, l'élément de forme arrondie et l'extrémité de forme plane de la tige de poussée ou du piston hydraulique sont en matériaux de duretés comparables

Avantageusement, l'élément de forme arrondie est noyé dans un produit lubrifiant ou enduit d'un produit lubrifiant.

Les différents aspects et caractéristiques de l'invention apparaîtront plus clairement dans la description qui va suivre et dans les figures annexées qui représentent :
- la figure 1, une vue en coupe partielle d'un dispositif conforme à l'invention,
- les figures 2a et 2b, des vues agrandies de formes de réalisation du dispositif de centrage axiale d'effort selon l'invention,
- les figures 3a à 3d, des variantes de réalisation du dispositif de l'invention,
- la figure 4, une variante de réalisation du dispositif selon l'invention.

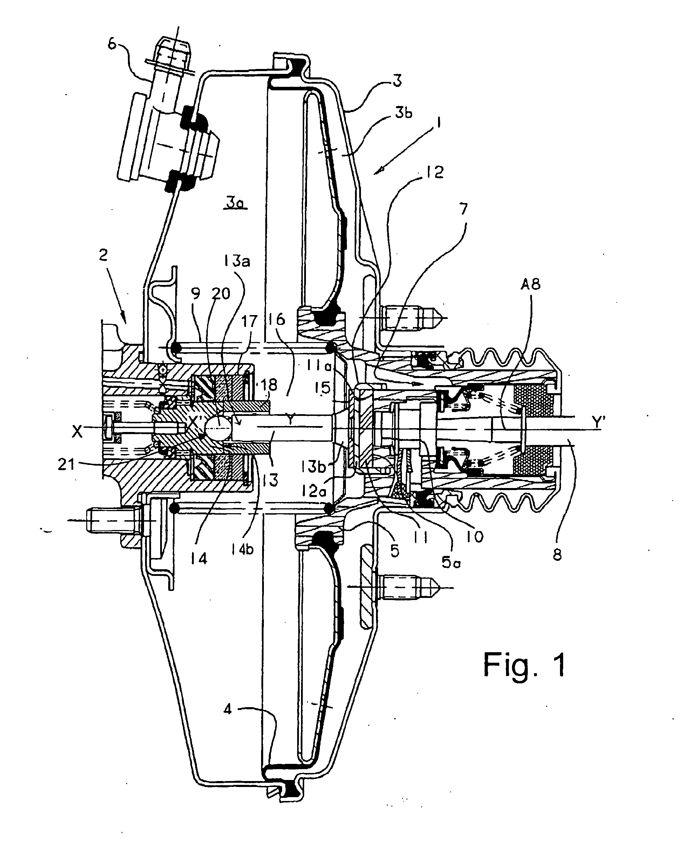

En se reportant à la figure 1 on va donc décrire un exemple de réalisation du dispositif de transmission d'effort selon l'invention.

Dans la technique automobile notamment, un servomoteur pneumatique d'assistance au frein permettant de commander le piston d'un maître cylindre est bien connu. Cependant pour mettre mieux en évidence l'intérêt de l'invention, le fonctionnement d'un tel servomoteur va être brièvement décrit.

Un servomoteur 1 (situé à droite sur la figure 1) comprend une enveloppe rigide 3 séparée en deux chambres 3a et 3b, de façon étanche, par une membrane 4 solidaire d'un piston pneumatique 5 mobile à l'intérieur de l'enveloppe 3.

La chambre avant 3a, est fermée sur la partie gauche de façon étanche par le maître cylindre 2. Cette chambre 3a est en permanence raccordée à une source de dépression (non représentée) par un raccord 6.

La pression dans la chambre arrière 3b est contrôlée par un clapet 7, commandé par une tige de commande 8, laquelle est reliée à la pédale de frein.

Lorsque la tige de commande 8 est en position de repos, en l'occurrence tirée vers la droite, le clapet 7 établit une communication entre les deux chambres 3a et 3b du servomoteur. La chambre arrière 3b étant alors soumise à la même dépression que la chambre avant 3a, le piston 5 est repoussé vers la droite, en position de repos, par un ressort 9.

L'actionnement de la tige de commande 8 vers la gauche a pour effet, dans un premier temps, de déplacer le clapet 7 de façon qu'il isole l'une de l'autre les chambres 3a et 3b puis, dans ùn deuxième temps, de déplacer ce clapet de façon qu'il ouvre la chambre arrière 3b à la pression atmosphérique.

La différence de pression entre les deux chambres alors ressentie par la membrane 4 exerce sur le piston 5 une poussée qui tend à le déplacer vers la gauche en comprimant le ressort 9. L'effort de freinage qu'exerce, par l'intermédiaire d'un plongeur 10, la tige de commande à destination du maître-cylindre, et l'effort d'assistance au freinage résultant de la poussée du piston 5, sont appliqués sur la face avant (droite) 11a d'un disque de réaction 11 logé dans une coupelle 12 propre à retransmettre ces efforts à une tige de poussée 13, laquelle a pour fonction d'actionner un piston hydraulique 14 du maître-cylindre. L'invention concerne essentiellement la chaîne de transmission d'effort que constituent ensemble, sur la figure 1, la tige de commande 8, le plongeur 10, le piston 5, le disque de réaction 11, la coupelle 12, la tige de poussée 13 et le piston hydraulique 14.

La figure 1 représente un premier exemple de réalisation du système de l'invention. Le piston 5 appuie sur le disque de réaction 11 par une surface annulaire axiale 5a qui entoure le palpeur 10. La coupelle 12 est de forme essentiellement cylindrique et présente un fond plat 12a, perpendiculaire à l'axe longitudinal YY' de la tige de commande, et sur toute la face interne duquel s'appuie le disque de réaction 11.

Dans l'exemple de réalisation de la figure 1, la tige de poussée 13 a une première de ses extrémités 13b, solidaire du fond plat 12a de la coupelle 12, et des moyens de maintien sont prévus sur le maître-cylindre 2 pour assurer que cette tige de poussée 13 reste sensiblement colinéaire avec la tige de commande 8.

Du côté du piston du maître cylindre, la tige de poussée 13 agit par l'intermédiaire d'un élément arrondi sur le piston 14 du maître cylindre.

Sur la figure 1, cet élément est représenté sous la forme d'un élément sphérique 20. De plus, sur l'exemple de réalisation de la figure 1, le piston ou une pièce intermédiaire 14 solidaire du piston possède, à son extrémité 14b qui est tournée vers la tige de poussée 13, une cuvette dont l'axe est situé selon l'axe XX' du piston. L'élément sphérique 20 est placé dans cette cuvette et la tige de poussée vient faire pression par son extrémité plane 13a contre cet élément sphérique. De plus, sur la figure 1, l'extrémité 14b est prolongée par une pièce cylindrique creuse 18 permettant de placer plus facilement l'élément sphérique 20 contre la cuvette 21. Cette pièce 18 peut former une même pièce avec la pièce 14.

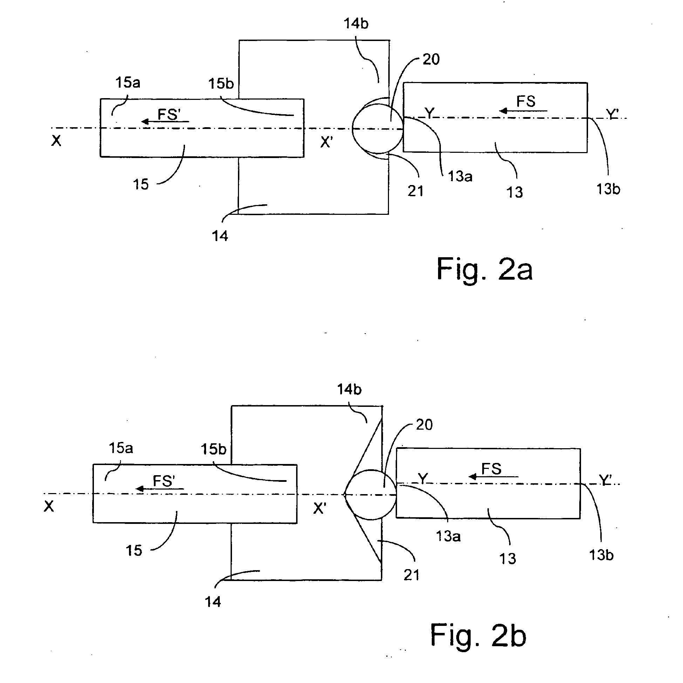

La figure 2a représente une vue agrandie d'un exemple de réalisation de ce dispositif de transmission d'efforts.

La pièce intermédiaire 14 est montée, par exemple vissée, sur l'extrémité 15b de la tige de piston 15 qui se prolonge à gauche (sur la figure) vers le piston du maître cylindre non représenté. La pièce 14 est, par exemple, cylindrique et son axe est colinéaire avec celui de la tige de piston 15. Il est à noter que la pièce 14 peut être le piston du maître cylindre lui-même.

L'extrémité 14b de la pièce intermédiaire 14 possède la cuvette 21 présentant une symétrie de révolution autour de l'axe XX'. Sur la figure 2a, cette cuvette 21 a une forme arrondie creuse dont l'ouverture est suffisante par rapport au diamètre de l'élément sphérique 20, et le creux est suffisant pour que l'élément sphérique se positionne naturellement selon l'axe XX' lorsque la tige de poussée 13 exerce une force FS de la gauche vers la droite.

La tige de poussée 13 est positionnée sur la figure 2a selon un axe YY' parallèle à l'axe XX' mais décalé par rapport à cet axe XX'. La face d'extrémité 13a de la tige de poussée 13 est plane et perpendiculaire à l'axe YY'.

L'élément sphérique est en matériau d'une grande dureté, supérieure à la dureté de la tige de piston. Il s'agit, par exemple, d'une bille, telle qu'on en trouve dans le commerce, dont la surface a été durcie.

La tige de poussée 13 est en matériau de dureté comparable à celle de l'élément sphérique de telle façon que la surface 13b de la tige de poussée 13 ne soit pas marquée par la forme de l'élément sphérique sous l'effet des forces transmises par la tige de poussée.

Par ailleurs, l'élément sphérique 20 et la surface 13a de la tige de poussée 13 présentent de bonnes qualités de surface de telle façon que la surface 13a puisse glisser aisément sur l'élément sphérique.

De cette façon, lorsqu'une force FS de sortie du servomoteur d'assistance au freinage sera exercée par la tige de poussée 13, la bille se placera selon l'axe XX'. La face 13a de la tige de poussée 13 pourra garder sa position selon l'axe YY' désaxée par rapport à l'axe XX'. L'effort FS se retrouvera sur la tige du piston 15 sous la forme d'une force FS' égale ou quasiment égale à la force FS et cela sans risque de détérioration du maître cylindre ni du servomoteur.

La figure 2b représente une variante de réalisation de la figure 2a. Selon cette variante, la cuvette 21 a une forme conique dont l'axe de révolution est située selon l'axe XX'. L'angle au sommet du cône est suffisamment ouvert (suffisamment grand) pour que l'élément sphérique se place naturellement selon l'axe XX' lorsqu'on lui exerce une force telle que FS avec la tige de poussée 13.

La cuvette pourrait avoir toute autre forme, sans sortir du cadre de l'invention, à condition de permettre à l'élément sphérique de se placer selon l'axe XX' .

Eventuellement la cuvette a une forme telle qu'elle permet à l'élément sphérique de pouvoir tourner librement sur elle-même sous l'effet d'un frottement de la face 13a lorsque la tige de poussée 13, désaxée par rapport à l'axe XX' appuie sur l'élément sphérique.

Par ailleurs, on pourra enduire la cuvette et l'élément sphérique d'un matériau lubrifiant ou noyer l'élément sphérique, la cuvette et l'extrémité 13a de la tige de poussée 13 dans un produit lubrifiant.

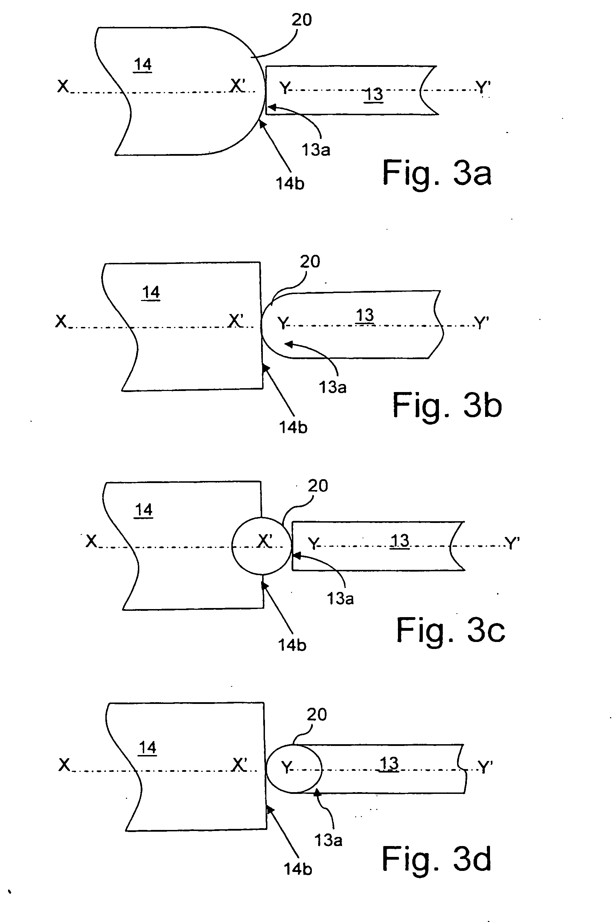

En se reportant aux figures 3a à 3d, on va maintenant décrire des variantes de réalisation de l'élément arrondi 20 qui est interposé entre la tige de poussée 13 et le piston du maître cylindre.

Selon la variante de réalisation représentée en figure 3a, le piston du maître cylindre (ou une pièce intermédiaire solidaire du maître cylindre) 14 possède une extrémité 14b ayant une forme arrondie. Cette extrémité 14b tient alors lieu d'élément arrondi 20. L'extrémité 13a de la tige de poussée 13 est une surface plane perpendiculaire à l'axe YY' de la tige de poussée. La surface arrondie 20 est en contact avec l'extrémité plane 13a de la tige de poussée 13 et peut glisser sur celle-ci ce qui permet ainsi de retransmettre les efforts de la tige de poussée au piston du maître cylindre sans risque de détérioration de celui-ci ou du servomoteur même si les axes XX' et YY' ne sont pas colinéaires.

La figure 3b représente une variante dans laquelle l'extrémité 13a de la tige de poussée est de forme arrondie et tient donc lieu d'élément arrondi 20. L'extrémité 14b de la pièce 14 (piston) est une surface plane perpendiculaire à l'axe XX'. L'élément arrondi 20 est en contact avec la surface plane 14b et peut glisser sur celle-ci.

Dans la variante de la figure 3c, un élément de forme arrondie 20 (sphérique par exemple) est emprisonné dans l'extrémité 14b de la pièce 14. La pièce 14 (piston par exemple) est avantageusement moulée et est par exemple en matériau plastique. La surface 13a de la tige de poussée 13 est plane et perpendiculaire à l'axe YY'.

La variante de réalisation de la figure 3d prévoit que l'élément de forme arrondie est fixé (par exemple par sertissage) à l'extrémité 13a de la tige de poussée 13. L'extrémité 14b de la pièce 14 est une surface plane perpendiculaire à l'axe XX'.

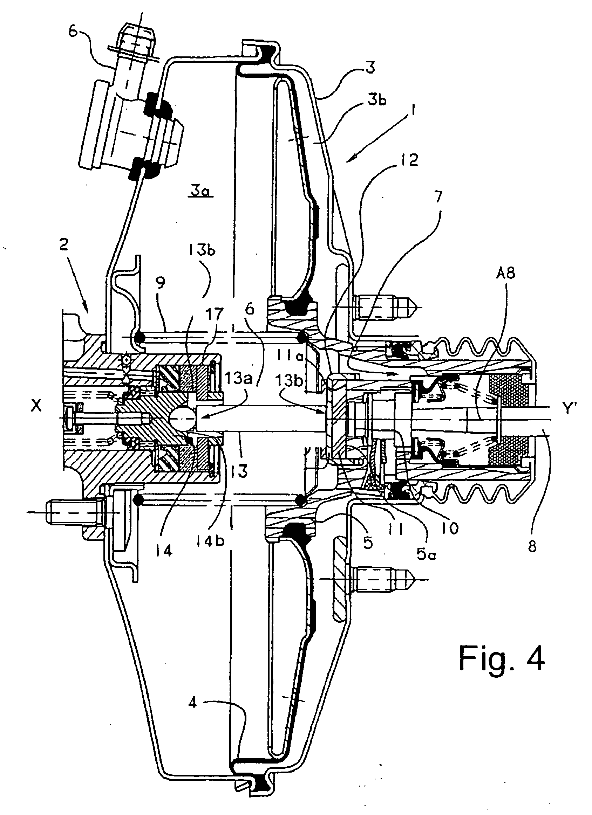

La figure 4 représente une variante de réalisation dans laquelle la tige de poussée est solidaire, par son extrémité 13b, d'une coupelle 12 qui est montée sur le piston 5 de façon à centrer la tige de poussée selon l'axe YY'. Cette coupelle est emboîtée à force ou vissée sur le piston 5. La position de la tige de poussée est ainsi déterminée par le montage de la coupelle 12 sur le piston.

L'autre extrémité 13a de la tige de poussée 13 est libre. Elle traverse une plaque de protection d'entrée 17.

## Revendications

1. Dispositif de centrage axial d'effort pour un ensemble composé d'un servomoteur pneumatique d'assistance au freinage (1) et d'un maître-cylindre (2), comprenant :
• une tige de commande (8) susceptible, à partir d'une position de repos, de subir un déplacement suivant une première direction axiale (YY') sous l'effet d'un effort d'entrée, cette tige étant terminée par un palpeur (10) ;
• un piston pneumatique (5) mobile suivant cette direction axiale (YY'), depuis une position de repos, sous l'effet d'une différence de pression commandée par le déplacement axial de la tige de commande;
• une tige de poussée (13) orientée sensiblement selon la première direction axiale (YY'), une extrémité arrière (13b) de cette tige de poussée recevant les efforts de sortie du piston (5) du servomoteur (1) et dont une extrémité avant (13a) retransmet ces efforts contre une extrémité arrière (14b) d'un piston hydraulique (14) du maître-cylindre (2), le piston hydraulique (14) étant orienté selon une deuxième direction axiale (XX') colinéaire ou non avec la première direction axiale;
**caractérisé en ce qu**'il comporte un élément de forme arrondie (20) situé entre ledit piston hydraulique (14) et la tige de poussée (13), l'une au moins de ladite extrémité avant (13a) de la tige de poussée ou de ladite extrémité arrière (14b) du piston hydraulique (14) présentant une surface plane perpendiculaire à la première direction axiale (YY') ou à la deuxième direction axiale (XX') respectivement et étant en contact avec l'élément de forme arrondie.

2. Dispositif de centrage axial d'effort selon la revendication 1, **caractérisé en ce qu**e ledit élément de forme arrondie (20) est de forme sphérique.

3. Dispositif de centrage axial d'effort selon la revendication 1, **caractérisé en ce que** le dit élément de forme arrondie (20) est l'extrémité avant (13a) de la tige de poussée (13), ou bien ledit élément de forme arrondie est l'extrémité arrière (14b) du piston hydraulique (14).

4. Dispositif de centrage axial d'effort selon la revendication 2, **caractérisé en ce que** ledit élément de forme arrondie (20) est emprisonné dans l'extrémité arrière (14b) du piston hydraulique (14) ou est fixé à l'extrémité avant (13a) de la tige de poussée (13).

5. Dispositif de centrage axial d'effort selon la revendication 2, **caractérisé en ce que** l'extrémité arrière (14b) du piston hydraulique (14) comporte un dispositif de centrage (21) disposé selon la deuxième direction axiale (YY') et dans lequel est placé l'élément de forme arrondie (20).

6. Dispositif de centrage axial d'effort selon la revendication 2, **caractérisé en ce que** l'extrémité avant (13a) de la tige de poussée(13) comporte un dispositif de centrage (21) disposé selon, la première direction axiale (XX') et dans lequel est placé l'élément de forme arrondie(20).

7. Dispositif de centrage axial d'effort selon l'une des revendications 5 ou 6, **caractérisé en ce que** le dispositif de centrage de l'élément de forme arrondie (20) comporte une cuvette (21) réalisée à l'extrémité arrière (14b) du piston hydraulique (14) ou à l'extrémité avant (13a) de la tige de poussée (13) .

8. Dispositif de centrage axial d'effort selon la revendication 7, **caractérisé en ce que** la cuvette (21) a une forme générale conique, sphérique ou paraboloïde.

9. Dispositif de centrage axial d'effort selon l'une des revendications précédentes, **caractérisé en ce que** l'élément de forme arrondie (20) et l'extrémité de forme plane de la tige de poussée ou du piston hydraulique (13) sont en matériaux de duretés comparables.

10. Dispositif de centrage axial d'effort selon l'une quelconque des revendications précédentes, **caractérisé en ce que** l'élément de forme arrondie (20) sont noyés dans un produit lubrifiant ou enduits d'un produit lubrifiant.

## Claims

1. Device for the axial centering of force for an assembly composed of a pneumatic brake booster (1) and of a master cylinder (2), comprising:
• a control rod (8) which, from a rest position, is able to be moved in a first axial direction (YY') under the effect of an input force, this rod being terminated by a feeler (10);
• a pneumatic piston (5) which can move in this axial direction (YY'), from a rest position, under the effect of a pressure difference controlled by the axial movement of the control rod;
• a push rod (13) oriented substantially in the first axial direction (YY'), a rear end (13b) of this push rod receiving the output forces from the piston (5) of the booster (1) and a front end (13a) of which retransmits these forces against a rear end (14b) of a hydraulic piston (14) of the master cylinder (2), the hydraulic piston (14) being oriented in a second axial direction (XX') which may or may not be collinear with the first axial direction;
**characterized in that** it comprises an element (20) of rounded shape situated between said hydraulic piston (14) and the push rod (13), at least one of the ends constituted by said front end (13a) of the push rod or said rear end (14b) of the hydraulic piston (14) having a planar surface which is perpendicular to the first axial direction (YY') or to the second axial direction (XX') and being in contact with the element of rounded shape.

2. Device for the axial centering of force according to Claim 1, **characterized in that** said element (20) of rounded shape is of spherical shape.

3. Device for the axial centering of force according to Claim 1, **characterized in that** said element (20) of rounded shape is the front end (13a) of the push rod (13), or alternatively said element of rounded shape is the rear end (14b) of the hydraulic piston (14).

4. Device for the axial centering of force according to Claim 2, **characterized in that** said element (20) of rounded shape is held captively in the rear end (14b) of the hydraulic piston (14) or is fastened to the front end (13a) of the push rod (13).

5. Device for the axial centering of force according to Claim 2, **characterized in that** the rear end (14b) of the hydraulic piston (14) comprises a centering device (21) arranged in the second axial direction (YY') and in which is placed the element (20) of rounded shape.

6. Device for the axial centering of force according to Claim 2, **characterized in that** the front end (13a) of the push rod (13) comprises a centering device (21) arranged in the first axial direction (XX') and in which is placed the element (20) of rounded shape.

7. Device for the axial centering of force according to either of Claims 5 and 6, **characterized in that** the device for centering the element (20) of rounded shape comprises a dish (21) formed at the rear end (14b) of the hydraulic piston (14) or at the front end (13a) of the push rod (13).

8. Device for the axial centering of force according to Claim 7, **characterized in that** the dish (21) has a conical, spherical or paraboloidal general shape.

9. Device for the axial centering of force according to one of the preceding claims, **characterized in that** the element (20) of rounded shape and the end of planar shape of the push rod or of the hydraulic piston (13) are made of materials of comparable hardnesses.

10. Device for the axial centering of force according to any one of the preceding claims, **characterized in that** the element (20) of rounded shape is embedded in a lubricating product or coated with a lubricating product.

## Patentansprüche

1. Vorrichtung zur axialen Kraftzentrierung für eine Baugruppe, die aus einem pneumatischen Servomotor zur Bremsunterstützung (1) und einem Hauptzylinder (2) besteht, mit:
• einer Steuerstange (8), die ausgehend von einer Ruheposition unter der Wirkung einer Eingangskraft einer Verlagerung entlang einer ersten axialen Richtung (YY') ausgesetzt sein kann, wobei diese Stange in einem Taster (10) endet;
• einem pneumatischen Kolben (5), der ausgehend von einer Ruheposition unter der Wirkung eines durch die axiale Verlagerung der Steuerstange gesteuerten Druckunterschieds entlang dieser axialen Richtung (YY') beweglich ist;
• einer Schubstange (13), die im Wesentlichen entlang der ersten axialen Richtung (YY') orientiert ist, wobei ein hinteres Ende (13b) dieser Schubstange die Kräfte am Ausgang des Kolbens (5) des Servomotors (1) aufnimmt und ein vorderes Ende (13a) diese Kräfte wiederum auf ein hinteres Ende (14b) eines hydraulischen Kolbens (14) des Hauptzylinders (2) überträgt, wobei der hydraulische Kolben (14) entlang einer zweiten axialen Richtung (XX') orientiert ist, welche zur ersten axialen Richtung kolinear ist oder nicht;
**dadurch gekennzeichnet, dass** sie ein Element (20) mit einer abgerundeten Form aufweist, das zwischen dem hydraulischen Kolben (14) und der Schubstange (13) angeordnet ist, wobei das vordere Ende (13a) der Schubstange und/oder das hintere Ende (14b) des hydraulischen Kolbens (14) eine ebene Fläche aufweist, die zur ersten axialen Richtung (YY') bzw. zur zweiten axiale Richtung (XX') senkrecht verläuft und mit dem Element mit der abgerundeten Form in Kontakt ist.

2. Vorrichtung zur axialen Kraftzentrierung nach Anspruch 1, **dadurch gekennzeichnet, dass** das Element (20) mit der abgerundeten Form kugelförmig ist.

3. Vorrichtung zur axialen Kraftzentrierung nach Anspruch 1, **dadurch gekennzeichnet, dass** das Element (20) mit der abgerundeten Form das vordere Ende (13a) der Schubstange (13) ist, oder das Element mit der abgerundeten Form ist das hintere Ende (14b) des hydraulischen Kolbens (14).

4. Vorrichtung zur axialen Kraftzentrierung nach Anspruch 2, **dadurch gekennzeichnet, dass** das Element (20) mit der abgerundeten Form im hinteren Ende (14b) des hydraulischen Kolbens (14) eingeschlossen oder am vorderen Ende (13a) der Schubstange (13) befestigt ist.

5. Vorrichtung zur axialen Kraftzentrierung nach Anspruch 2, **dadurch gekennzeichnet, dass** das hintere Ende (14b) des hydraulischen Kolbens (14) eine Zentrierungsvorrichtung (21) aufweist, die entlang der zweiten axialen Richtung (YY') angeordnet ist und in die das Element (20) mit der abgerundeten Form eingesetzt ist.

6. Vorrichtung zur axialen Kraftzentrierung nach Anspruch 2, **dadurch gekennzeichnet, dass** das vordere Ende (13a) der Schubstange (13) eine Zentrierungsvorrichtung (21) aufweist, die entlang der ersten axialen Richtung (XX') angeordnet ist und in die das Element (20) mit der abgerundeten Form eingesetzt ist.

7. Vorrichtung zur axialen Kraftzentrierung nach Anspruch 5 oder 6, **dadurch gekennzeichnet, dass** die Vorrichtung zur Zentrierung des Elements (20) mit der abgerundeten Form eine Schale (21) aufweist, die am hinteren Ende (14b) des hydraulischen Kolbens (14) oder am vorderen Ende (13a) der Schubstange (13) ausgebildet ist.

8. Vorrichtung zur axialen Kraftzentrierung nach Anspruch 7, **dadurch gekennzeichnet, dass** die Schale (21) eine insgesamt konische, kugelige oder paraboloidische Form aufweist.

9. Vorrichtung zur axialen Kraftzentrierung nach einem der vorhergehenden Ansprüche, **dadurch gekennzeichnet, dass** das Element (20) mit der abgerundeten Form und das Ende mit der ebenen Form der Schubstange oder des hydraulischen Kolbens (14) aus Materialien mit vergleichbaren Härten bestehen.

10. Vorrichtung zur axialen Kraftzentrierung nach einem der vorhergehenden Ansprüche, **dadurch gekennzeichnet, dass** das Element (20) mit der abgerundeten Form in ein Schmiermittel getaucht oder mit einem Schmiermittel bestrichen ist.
